# EUROPÄISCHE PATENTSCHRIFT

(11) **EP 0 549 518 B1**
(45) Veröffentlichungstag und Bekanntmachung des Hinweises auf die Patenterteilung: **23.08.1995**
(21) Anmeldenummer: 92810826.5
(22) Anmeldetag: 27.10.1992
(51) Int. Cl.: C02F 3/20, B01F 3/04

(54) **Einrichtung zum Begasen einer Flüssigkeit**
Apparatus for introducing gas into a liquid
Dispositif pour la gazéification d'un liquide

(30) Priorität: 20.12.1991 CH 3798/91
(43) Veröffentlichungstag der Anmeldung: 30.06.1993
(73) Patentinhaber: HUBER & SUHNER AG KABEL-, KAUTSCHUK-, KUNSTSTOFF-WERKE, CH-8330 Pfäffikon ZH (CH)
(72) Erfinder: Volkmar, Herbert, CH-8331 Auslikon (CH); Müller, Konrad, CH-8610 Uster (CH)
(74) Vertreter: Hepp, Dieter

(56) Entgegenhaltungen:
- DE-A- 3 410 267
- DE-A- 3 829 666
- DE-U- 9 013 213
- US-A- 3 754 740

## Beschreibung

Die Erfindung bezieht sich auf eine Einrichtung zum feinblasigen Begasen einer Flüssigkeit mit einer Stützplatte, die wenigstens eine Gasaustrittsöffnung aufweist, mit einer mit einem Randbereich der Stützplatte dicht verbundenen, mit feinen Gasdurchtrittsporen versehenen Belüftermembrane und mit rückschlagventilartig wirkenden Mitteln zum Verschliessen der Gasaustrittsöffnung.

Solche Einrichtungen, die insbesondere für das Belüften von Abwasser verwendet werden können, sind in verschiedenen Ausführungen bekannt. Beispielsweise zeigt die DE-OS 29 42 607 eine Einrichtung, in der die rückschlagventilartig wirkenden Mittel ein Abdichtrondell enthalten, das an der porösen Belüftermembrane befestigt ist und im Bereich der Gasaustrittsöffnung die Poren der Belüftermembrane überdeckt. Bei Abschaltung der Gaszufuhr wird die Belüftermembrane mit dem Abdichtrondell vom Flüssigkeitsdruck auf die Gasaustrittsöffnung gedrückt und verhindert den Eintritt von Flüssigkeit, Schlamm oder anderen Teilchen in die Gasaustrittsöffnung. In der DE-PS 33 16 140 ist vorgesehen, dass die poröse Belüftermembrane im Bereich der Gasaustrittsöffnung frei von Poren ist, so dass sie die Gasaustrittsöffnung dicht verschliessen kann, wenn sie vom Flüssigkeitsdruck auf die Oeffnung gedrückt wird. Gemäss der DE-PS 34 10 267 ist im Bereich der Gasaustrittsöffnung eine undurchlässige Scheibe in oder auf der porösen Belüftermembrane befestigt.

Die poröse Belüftermembrane besteht in der Regel aus biegsamem und vorzugsweise gummielastischem Material, und sie wird im Betrieb durch den Druck des zugeführten Gases von der Gasaustrittsöffnung weggedrückt und aufgewölbt. Der Gasdruck muss relativ hoch sein, um einen ausreichenden Gasdurchsatz durch die feinen Poren zu erreichen. Durch den hohen Druck und die Verformungen beim Abschalten und Wiedereinschalten der Gaszufuhr wird die Belüftermembrane stark beansprucht, was dazu führt, dass die Belüftermembrane im Laufe der Zeit wellig werden und/oder Risse bekommen kann. Wenn das eintritt, dann können in den vorstehend beschriebenen bekannten Einrichtungen die rückschlagventilartig wirkenden Mittel den dichten Verschluss der Gasaustrittsöffnung beim Abschalten der Gaszufuhr nicht mehr mit Sicherheit gewährleisten.

Die Aufgabe der Erfindung besteht darin, diesen Nachteil in einfacher Weise zu beseitigen und eine Einrichtung der eingangs angegebenen Art so auszubilden, dass der dichte Verschluss der Gasaustrittsöffnung beim Abschalten der Gaszufuhr - oder wenn der Druck des Gases aus irgendwelchen Gründen unter den Flüssigkeitsdruck sinkt - unter allen Umständen gewährleistet werden kann, auch wenn die poröse Belüftermembrane schadhaft wird. Ausserdem soll die Belüftermembrane mit möglichst kleinen Toleranzen bei einem vorbestimmbaren, immer gleichen Gasdruck angehoben werden. Dies ist erforderlich, damit alle Belüfter einer Anlage möglichst gleichzeitig öffnen.

Diese Aufgabe wird erfindungsgemäss in erster Linie gemäss Kennzeichen der Patentansprüche gelöst.

Der biegsame Randabschnitt der Ventilmembrane kann ähnlich einer Rückschlagklappe die Gasaustrittsöffnung(en) unabhängig von der porösen Belüftermembrane zuverlässig dicht verschliessen, sobald der Druck nach der Gasaustrittsöffnung höher ist, als der Druck in der Gasaustrittsöffnung.

Der biegsame Randabschnitt der Ventilmembrane kann sich in vorteilhafter Weise im wesentlichen um den ganzen Umfang der Ventilmembrane erstrecken und die Mündungen mehrerer verteilt angeordneter Gasaustrittsöffnungen überdecken, die eine gleichmässige Verteilung des zugeführten Gases im Raum zwischen der Stützplatte und der porösen Belüftermembrane bewirken können. Dabei kann die Ventilmembrane etwa kreisrund sein und die Gasaustrittsöffnungen können auf einem Kreis verteilt angeordnet sein. Aus herstellungstechnischen Gründen wird dann die Stützplatte vorteilhaft zweiteilig ausgeführt.

Besonders vorteilhaft lässt sich die Erfindung realisieren, wenn eine Anordnung zum Erzeugen eines Hohlraums zwischen dem Grundkörper und der Belüftermembrane vorgesehen ist, der auch dann erhalten bleibt, wenn die Belüftermembrane durch den Flüssigkeitsdruck auf den Grundkörper gedrückt wird, und wenn die Gasaustrittsöffnung mit diesem Hohlraum in Verbindung steht. Auf diese Weise wird vor allem gewährleistet, dass die Belüftermembrane auch bei längerer Betriebs-Unterbrechung nicht mit dem Grundkörper verklebt, und dass beim Einschalten der Gaszufuhr die Belüftermembrane im gesamten Bereich des Hohlraums durch den Gasdruck beaufschlagt und dadurch gegen den Widerstand der auf der Belüftermembrane lastenden Flüssigkeitssäule bereits bei kleinem Gasdruck angehoben wird. Je grösser dabei die Fläche des erfindungsgemäss gewährleisteten Hohlraums ist, desto grösser ist die auf die Belüftermembrane im Moment des Zuschaltens ausgeübte Kraft. Dadurch lässt sich die Belüftermembrane z.B. auch anheben, wenn nach längerem Stillstand eine leichte Verklebung zwischen der Belüftermembrane und dem Grundkörper, auf welchem sie aufliegt, eingetreten ist. Dabei ist es zweckmässig, wenn der Hohlraum unmittelbar über der Gasaustrittsöffnung gebildet wird, um die schnelle Gaszufuhr zu sichern.

Ersichtlicherweise lässt sich der Hohlraum technisch besonders einfach verwirklichen, wenn wenigstens ein Abstützelement vorgesehen ist, welches das flächige Aufliegen der Belüftermembrane auf dem Grundkörper im Bereich des Hohlraums verhindert.

Ersichtlicherweise lässt sich der Hohlraum auch dadurch bilden, dass die Gasaustrittsöffnung mit der Ventilmembrane im Grundkörper versenkt angeordnet wird. Besonders vorteilhaft ist es aber, wenn der Hohlraum durch wenigstens ein Abstützelement und den Membrantragkörper gebildet wird, wobei die Belüftermembrane dadurch einmal im Zentrum der Ventilmembrane und ausserdem etwa ringförmig um die Gasaustrittsöffnung herum abgestützt wird.

Als Abstützelement lässt sich besonders vorteilhaft ein etwa ringförmig angeordneter Vorsprung des Grundkörpers ausbilden, der als Zusatzfunktion die Abdichtung zwischen Belüftermembrane und Grundkörper übernehmen kann. Alternativ sind auch andere Formen von Abstützelementen, wie z.B. stempelartige Erhöhungen oder Federeinlagen, etc., verwendbar.

Bevorzugte Ausführungsbeispiele der erfindungsgemässen Einrichtung werden nachstehend anhand der Zeichnungen näher erläutert. In diesen zeigen:
- Figur 1: einen schematischen Vertikalschnitt durch eine Begasungseinrichtung im Betriebszustand, in welchem einem Gaszufuhrstutzen Gas unter Druck zugeführt ist,
- Figur 2: einen gleichen Vertikalschnitt wie Fig. 1 im Zustand ohne Druckgaszufuhr,
- Figur 3: in grösserem Massstab einen Vertikalschnitt durch einen Membrantragkörper und eine auf diesem angeordnete Ventilmembrane der Einrichtung,
- Figur 4: eine Draufsicht auf den Membrantragkörper allein, ohne die Ventilmembrane,
- Figur 5: einen schematischen Vertikalschnitt durch eine abgewandelte Begasungseinrichtung, wobei im linken Abschnitt der Betriebszustand und im rechten Abschnitt der Ruhezustand dargestellt ist,
- Figur 6: eine Draufsicht auf den Grundkörper gemäss Fig. 5, und
- Figur 7: einen Ausschnitt durch einen Vertikalschnitt einer weiter abgewandelten Begasungseinrichtung im Ruhezustand.

Die dargestellte Einrichtung zum Begasen einer Flüssigkeit besitzt eine Stützplatte, die im Ausführungsbeispiel zweiteilig ist und aus einem Grundkörper 1 und einem auf diesem befestigten Membrantragkörper 2 besteht. Ueber der Stützplatte 1, 2 ist eine Belüftermembrane 3 aus biegsamem, gummielastischem Material angeordnet, deren Rand mit dem Rand des Grundkörpers 1 dicht verbunden ist, beispielsweise mittels eines Spannrings 4. Der Grundkörper 1 und die Belüftermembrane 3 können in Draufsicht im wesentlichen kreisrund sein.

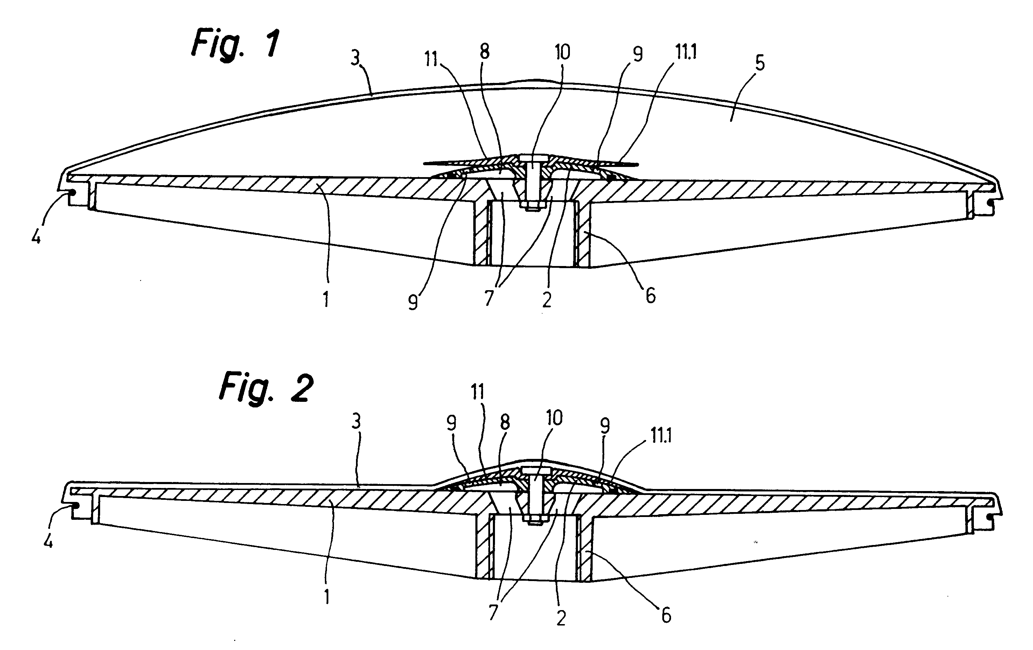

In den Raum 5 zwischen der Stützplatte 1, 2 und der Belüftermembrane 3 wird im Betrieb ein Gas unter Druck eingeführt, das dann durch in der Belüftermembrane 3 vorhandene feine Gasdurchtrittsporen (nicht dargestellt) in Form von feinen Gasblasen in eine über der Belüftermembrane 3 stehende Flüssigkeit, z.B. Abwasser, austritt. Durch den Gasdruck im Raum 5 wird die Belüftermembrane 3 wie in Fig. 1 gezeigt kalottenförmig aufgewölbt.

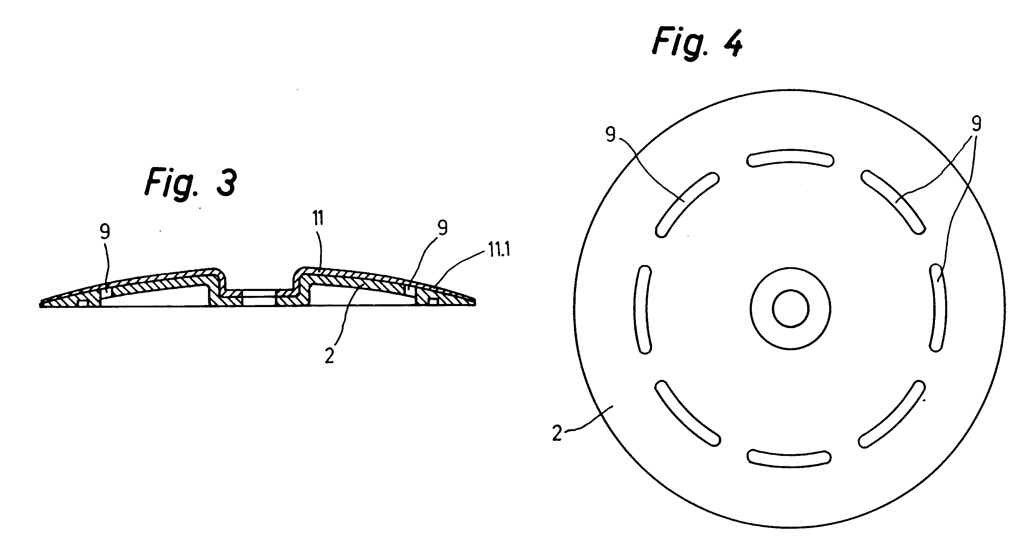

Für die Zufuhr des Gases ist an den Grundkörper 1 ein Gaszufuhrstutzen 6 angeformt, der über Gaszufuhröffnungen 7 mit einem zwischen dem Grundkörper 1 und dem Membrantragkörper 2 vorhandenen, im vorliegenden Fall ringförmigen Gasverteilraum 8 in Verbindung steht. Von dem Gasverteilraum 8 gehen mehrere Gasaustrittsöffnungen 9, die im vorliegenden Fall wie in Fig. 4 gezeigt die Form von Schlitzen haben, welche in etwa gleichbleibendem Abstand vom kreisrunden Umfang des Membrantragkörpers 2 verlaufen.

Auf dem Membrantragkörper 2 ist mittels eines Befestigungselementes 10 eine Ventilmembrane 11 befestigt, die vorzugsweise ebenfalls aus gummielastischem Material besteht. Im vorliegenden Fall befestigt das Befestigungselement 10 gleichzeitig auch den Membrantragkörper 2 auf dem Grundkörper 1. Die Ventilmembrane 11 ist gleich wie der Membrantragkörper 2 kreisrund, und sie besitzt einen biegsamen Randabschnitt 11.1, der die Mündungen der Gasaustrittsöffnungen 9 überdeckt. Im Betriebszustand, wenn der Druck des dem Zufuhrstutzen 6 zugeführten Gases höher ist als der Druck der über der porösen Belüftermembrane 3 stehenden Flüssigkeit, drückt das zuströmende Gas den biegsamen Randabschnitt 11.1 der Ventilmembrane 11 von den Mündungen der Gasaustrittsöffnungen 9 weg und strömt in den Raum 5 zwischen der Stützplatte 1, 2 und der Belüftermembrane 3.

Wenn die Gaszufuhr abgeschaltet wird, oder wenn der Druck des zugeführten Gases aus irgendwelchen Gründen niedriger ist als der Druck der über der porösen Belüftermembrane 3 stehenden Flüssigkeit, dann drückt die Flüssigkeit die Belüftermembrane 3 wie in Fig. 2 gezeigt nach unten auf die Stützplatte 1, 2. Die Belüftermembrane 3 drückt ihrerseits den biegsamen Randabschnitt 11.1 der Ventilmembrane 11 auf die Mündungen der Gasaustrittsöffnungen 9, wodurch diese dicht verschlossen werden.

Der wie eine Rückschlagklappe wirkende biegsame Randabschnitt 11.1 der Ventilmembrane 11 verschliesst die Mündungen der Gasaustrittsöffnungen 9 aber auch dann, wenn die poröse Belüftermembrane 3 gerissen ist und die Flüssigkeit direkt mit einem Druck auf den Randabschnitt 11.1 drückt, der höher ist als der Druck des zugeführten Gases.

Die auf einem Kreis verteilt angeordneten Gasaustrittsöffnungen 9 und zusätzlich der das zugeführte Gas radial nach aussen umlenkende Randabschnitt 11.1 der in ihrer Mitte auf dem Membrantragkörper 2 befestigten Ventilmembrane 11 bewirken eine gleichmässige Verteilung des zugeführten Gases im Raum 5 zwischen der Stützplatte 1, 2 und der porösen Belüftermembrane 3.

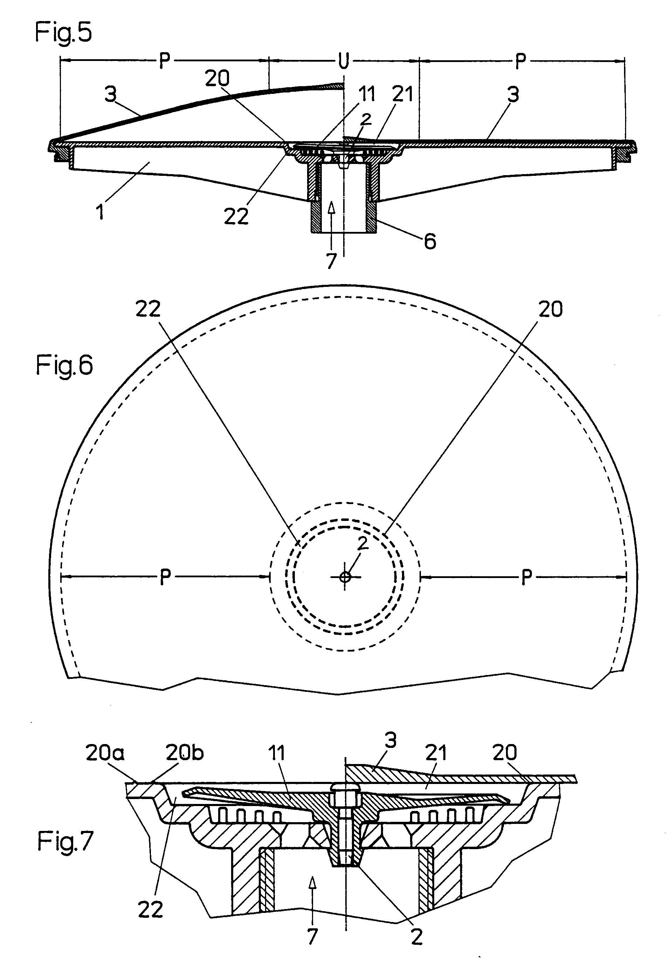

Gemäss Fig. 5 und 6 weist die dargestellte Einrichtung zum Begasen einer Flüssigkeit einen Grundkörper 1 auf, der mit einer im Zentrum angeordneten Gaszufuhröffnung 7 versehen ist, welche mittels eines Gaszufuhrstutzes 6 versorgt wird. Die Gaszufuhröffnung 7 ist durch eine dünne Ventilmembrane 11 verschlossen. Die Ventilmembrane 11 wird durch einen Membrantragkörper 2 in Form eines im Zentrum der Ventilmembrane 11 angeordneten Bolzens getragen. Der Grundkörper 1 wird durch die Belüftermembrane 3 abgedeckt, welche in einem Kreisring-Abschnitt P mit feinen Poren zum Begasen der darüberliegenden Flüssigkeit versehen ist. Im Bereich U ist die Belüftermembrane 3 dagegen dicht.

Solange der Druck des zugeführten Gases höher ist, als der Druck der über der porösen Belüftermembrane 3 stehenden Flüssigkeit, drückt das zuströmende Gas den Randabschnitt der Ventilmembrane 11 von der Mündung der Gaszufuhröffnung 7 weg und strömt in den Raum zwischen Grundplatte 1 und Belüftermembrane 3. Die Belüftermembrane 3 wird gespannt und aus den Poren im Bereich P können feine Luftblasen austreten.

Sinkt dagegen der Innendruck ab, weil z.B. die Gaszufuhr ausgeschaltet wird, wird die Belüftermembrane 3 gemäss Darstellung in der rechten Hälfte von Fig. 5 flach auf die Grundplatte 1 gedrückt. Dort liegt sie im Bereich P der Poren an, so dass bei einer Beschädigung der Belüftermembrane 3 zunächst Wassereinbruch verhindert oder zumindest erschwert wird. Die Belüftermembrane 3 liegt ausserdem, wie dargestellt, auf einer ringförmigen Dichtkante 20 auf, so dass sich zwischen der Ventilmembrane 11 und der Belüftermembrane 3 ein Hohlraum 21 ergibt. Sobald die Gaszufuhr wieder eingeschaltet wird, erhöht sich der Luftdruck im gesamten Bereich des Hohlraums 21, wodurch eine nach oben gerichtete Abhebekraft auf die Belüftermembrane 3 ausgeübt wird.

Wie aus Fig. 5 ersichtlich wird, ist die Dichtkante 20 etwa lippenförmig derart geformt, dass eine ringförmige Abdichtung zum Bereich U der Belüftermembrane 3 erfolgt, wenn diese gegen den Grundkörper 1 gepresst wird. Auf diese Weise wird Wassereintritt in den Hohlraum 21 erschwert oder verhindert, wenn die Belüftermembrane 3 im Bereich P grössere Beschädigungen aufweist.

Selbst wenn die Dichtwirkung zwischen die Dichtkante 20 und der Belüftermembrane 3 ungenügend sein sollte, dichtet in einem solchen Fall zusätzlich die Ventilmembrane 11 den Zufuhrstutzen 6, bzw. die Gaszufuhröffnung 7 zuverlässig ab.

Während beim Ausführungsbeispiel gemäss Fig. 5 und 6 die Belüftermembrane 3 im Bereich des Hohlraums 21 sowohl auf einem als Dichtkante 20 ausgebildeten Abstützelement als auch auf dem Membrantragkörper 2 aufliegt, wird beim Ausführungsbeispiel gemäss Fig. 7 die Belüftermembrane 3 lediglich durch zwei etwa ringförmige, als Wulste 20a, 20b ausgebildete Abstützelemente getragen. Dies ist deshalb möglich, weil einerseits die Ventilmembrane in einer Vertiefung 22 im Grundkörper 1 angeordnet ist, und andererseits die Belüftermembrane ausreichend biegesteif ist, damit der Hohlraum 21 auch ohne zusätzliche Abstützung durch den Membrantragkörper 2 erhalten bleibt.

## Patentansprüche

1. Einrichtung zum feinblasigen Begasen einer Flüssigkeit, mit einer Stützplatte (1, 2), die wenigstens eine Gasaustrittsöffnung (9) aufweist, mit einer mit einem Randbereich der Stützplatte (1, 2) dicht verbundenen, mit feinen Gasdurchtrittsporen versehenen Belüftermembrane (3) und mit rückschlagventilartig wirkenden Mitteln (11) zum Verschliessen der Gasaustrittsöffnung (9), dadurch gekennzeichnet, dass die Mittel zum Verschliessen der Gasaustrittsöffnung (9) eine Ventilmembrane (11) enthalten, deren Randabschnitt (11.1) die Mündung der Gasaustrittsöffnung(en) (9) in Schliess-Stellung abdeckt.

2. Einrichtung nach Anspruch 1, dadurch gekennzeichnet, dass die Stützplatte (1, 2) einen Grundkörper (1) und einen auf dem Grundkörper befestigten Membrantragkörper (2) besitzt, der die Ventilmembrane (11) trägt, wobei der Grundkörper (1) eine Gaszufuhröffnung (7) enthält und zwischen dem Grundkörper (1) und dem Membrantragkörper (2) ein Gasverteilraum (8) enthalten ist, von welchem die Gasaustrittsöffnung bzw. -öffnungen (9) ausgehen.

3. Einrichtung nach Anspruch 2, dadurch gekennzeichnet, dass der Membrantragkörper (2) mehrere Gasaustrittsöffnungen (9) in Form von Schlitzen enthält, die in etwa gleichbleibendem Abstand vom Umfang des Membrantragkörpers (2) verlaufen.

4. Einrichtung nach Anspruch 2 oder 3, dadurch gekennzeichnet, dass der Membrantragkörper (2) einen im wesentlichen kreisrunden Umfang besitzt.

5. Einrichtung nach einem der Ansprüche 2 bis 4, dadurch gekennzeichnet, dass die Ventilmembrane (11) auf dem Grundkörper (1) angeordnet ist.

6. Einrichtung nach einem der vorangegangenen Ansprüche, dadurch gekennzeichnet, dass die Ventilmembrane (11) einen gegen die Gaszufuhröffnung (7) gerichteten, gebogenen Randabschnitt aufweist.

7. Einrichtung nach einem der vorangegangenen Ansprüche, dadurch gekennzeichnet, dass eine Anordnung (20; 20a; 20b; 2) zum Erzeugen eines Hohlraums (21) zwischen Grundkörper (1) und Belüftermembrane (3) vorgesehen ist, welcher Hohlraum erhalten bleibt, wenn die Belüftermembrane durch den Flüssigkeitsdruck der umgebenden Flüssigkeit auf den Grundkörper (1) gedrückt wird, und dass die Gasaustrittsöffnung (7) mit dem Hohlraum (21) in Verbindung steht.

8. Einrichtung nach Anspruch 7, dadurch gekennzeichnet, dass der Hohlraum (21) über der Gasaustrittsöffnung (7) gebildet wird.

9. Einrichtung nach Anspruch 8, dadurch gekennzeichnet, dass der Hohlraum durch wenigstens ein Abstützelement (20; 20a; 20b; 2) gebildet wird.

10. Einrichtung nach Anspruch 9, dadurch gekennzeichnet, dass der Hohlraum durch das oder die Abstützelement(e) (20, 20a, 20b) und dem Membrantragkörper (2) gebildet wird.

11. Einrichtung nach einem der vorangegangenen Ansprüche, dadurch gekennzeichnet, dass die Gasaustrittsöffnung (7) von wenigstens einem, vom Grundkörper (1) im unperforierten Bereich U der Belüftermembrane (3) abstehenden Dichtkante (20, 20a, 20b) umgeben ist, der einerseits die Belüftermembrane (3) abstützt und einen Hohlraum (21) über der Gasaustrittsöffnung (7) bildet, wenn der Aussendruck der Flüssigkeit grösser ist, als der Innendruck unter der Belüftermembrane und der andererseits mit der Belüftermembrane (3) eine Abdichtung zum Hohlraum (21) bildet.

## Claims

1. Device for the fine aeration of a liquid, with a support plate (1, 2) which possesses at least one gas outlet opening (9), with an aeration membrane (3) which is closely connected with an edge area of the support plate (1, 2) and provided with fine pores for the passing of gas, and with means (11) taking effect as a type of nonreturn valve for closure of the gas outlet opening (9), characterized in that the said means contain a valve membrane (11) for closing the gas outlet opening, the edge section (11.1) of said valve membrane covering the aperture of the gas outlet opening(s) (9) in the closed position.

2. Device according to claim 1, characterized in that the support plate (1, 2) possesses a base body (1) and a membrane support body (2) affixed to said base body, said membrane support body supporting the valve membrane (11), said base body (1) containing a gas feed opening (7), and a gas distribution chamber (8) being contained between the base body (1) and the membrane support body (2), and that gas outlet opening(s) (9) extend from said gas distribution chamber.

3. Device according to claim 2, characterized in that the membrane support body (2) contains a plurality of gas outlet openings (9) in the form of slots which run at an approximately constant distance from the circumference of the membrane support body (2).

4. Device according to claim 2 or 3, characterized in that the membrane support body (2) possesses a circumference that is essentially circular.

5. Device according to one of the claims 2 to 4, characterized in that the valve membrane (11) is arranged on the base body (1).

6. Device according to one of the preceding claims, characterized in that the valve membrane (11) possesses a bowed edge section which is directed towards the gas feed opening (7).

7. Device according to one of the preceding claims, characterized in that an arrangement (20; 20a; 20b; 2) is provided for creating a hollow chamber (21) between the base body (1) and the aeration membrane (3), said hollow chamber being maintained when the aeration membrane is pressed onto the base body (1) by the pressure of the surrounding liquid, and that the gas outlet opening (7) is connected to the hollow chamber (21).

8. Device according to claim 7, characterized in that the hollow chamber (21) is formed above the gas outlet opening (7).

9. Device according to claim 8, characterized in that the hollow chamber is formed by at least one support element (20; 20a; 20b; 2).

10. Device according to claim 9, characterized in that the hollow chamber is formed by the support element or elements (20, 20a, 20b) and by the membrane support body (2).

11. Device according to one of the preceding claims, characterized in that the gas outlet opening (7) is surrounded by at least one sealing edge (20, 20a, 20b) protruding from the base body (1) in the non-perforated area U of the aeration membrane (3), said sealing area on the one hand supporting the aeration membrane (3) and forming a hollow chamber (21) above the gas outlet opening (7) when the external pressure of the liquid is greater than the internal pressure below the aeration membrane, and on the other hand, with the aeration membrane (3), forming a seal for the hollow chamber (21).

## Revendications

1. Dispositif pour la gazéification par petites bulles d'un liquide, comportant une plaque d'appui (1, 2) pourvue d'au moins une ouverture de sortie de gaz (9), une membrane formant aérateur (3) reliée de façon étanche à une zone du bord de la plaque d'appui (1, 2) et pourvue de fins pores de passage de gaz, et des moyens (11) agissant à la manière de clapets anti-retour pour obturer l'ouverture de sortie de gaz (9), caractérisé en ce que les moyens pour obturer l'ouverture de sortie de gaz (9) contiennent une membrane formant soupape (11) dont la bordure (11.1) couvre l'orifice de l'ouverture ou des ouvertures de sortie de gaz (9) en position fermée.

2. Dispositif selon la revendication 1, caractérisé en ce que la plaque d'appui (1, 2) comprend un corps de base (1) et un corps de support de membrane (2), fixé sur celui-ci, qui porte la membrane formant soupape (11), étant précisé que le corps de base (1) contient une ouverture d'amenée de gaz (7) et que le corps de base (1) et le corps de support de membrane (2) définissent entre eux un espace distributeur de gaz (8) d'où partent l'ouverture ou les ouvertures de sortie de gaz (9).

3. Dispositif selon la revendication 2, caractérisé en ce que le corps de support de membrane (2) contient plusieurs ouvertures de sortie de gaz (9) en forme de fentes qui s'étendent à une distance à peu près constante de la circonférence du corps de support de membrane (2).

4. Dispositif selon la revendication 2 ou 3, caractérisé en ce que le corps de support de membrane (2) a une circonférence sensiblement circulaire.

5. Dispositif selon l'une des revendications 2 à 4, caractérisé en ce que la membrane formant soupape (11) est disposée sur le corps de base (1).

6. Dispositif selon l'une des revendications précédentes, caractérisé en ce que la membrane formant soupape (11) comporte une bordure courbe dirigée vers l'ouverture d'amenée de gaz (7).

7. Dispositif selon l'une des revendications précédentes, caractérisé en ce qu'il est prévu un dispositif (20 ; 20a ; 20b ; 2) pour former une cavité (21) entre le corps de base (1) et la membrane formant aérateur (3), laquelle cavité est conservée lorsque la membrane formant aérateur est pressée sur le corps de base (1) par la pression du liquide environnant, et en ce que l'ouverture de sortie de gaz (7) communique avec la cavité (21).

8. Dispositif selon la revendication 7, caractérisé en ce que la cavité (21) est formée au-dessus de l'ouverture de sortie de gaz (7).

9. Dispositif selon la revendication 8, caractérisé en ce que la cavité est formée par au moins un élément d'appui (20 ; 20a ; 20b ; 2).

10. Dispositif selon la revendication 9, caractérisé en ce que la cavité est formée par l'élément ou les éléments d'appui (20, 20a, 20b) et le corps de support de membrane (2).

11. Dispositif selon l'une des revendications précédentes, caractérisé en ce que l'ouverture de sortie de gaz (7) est entourée par au moins un bord d'étanchéité (20, 20a, 20b) qui part du corps de base (1), dans la zone non perforée U de la membrane formant aérateur (3), et qui, d'une part, supporte la membrane formant aérateur (3) et forme une cavité (21) au-dessus de l'ouverture de sortie de gaz (7) lorsque la pression externe du liquide est supérieure à la pression interne régnant sous la membrane formant aérateur, et qui forme d'autre part avec la membrane formant aérateur (3) un joint d'étanchéité pour la cavité (21).
